# EUROPEAN PATENT SPECIFICATION

(11) **EP 2 873 852 B1**
(45) Date of publication and mention of the grant of the patent: **09.01.2019**
(21) Application number: 14192845.7
(22) Date of filing: 12.11.2014
(51) Int. Cl.: F03B 13/18, F16J 15/16, F04B 19/02

(54) **Device and method for converting energy from wave motions of the sea to another form of energy**
Vorrichtung und Verfahren zur Umwandlung von Energie aus Wellenbewegungen der See in eine andere Energieform
Dispositif et procédé pour convertir l'énergie du mouvement des vagues en mer en une autre forme d'énergie

(30) Priority: 13.11.2013 NL 2011792
(43) Date of publication of application: 20.05.2015
(73) Proprietor: Protoplan B.V., 1689 GX Zwaag (NL)
(72) Inventor: Gardner, Fred Ernest, 1689 GX Zwaag (NL)
(74) Representative: Patentwerk B.V.

(56) References cited:
- DE-A1- 2 406 756
- DE-A1- 19 546 113
- US-A- 3 339 464
- US-A1- 2012 126 540

## Description

The invention relates to a device for converting energy from wave motions at sea to another form of energy, which is provided with a fixed element and an element movable relative to the fixed element, which elements are configured to be subjected to the wave motions and wherein the elements enclose a chamber, the volume of which varies with the relative movements of the elements, and an energy converter adapted to convert the mechanical energy from the relative movement between the fixed element and the movable element to the other form of energy, wherein the fixed element and the movable element are each connected to a first rolling membrane and to a second rolling membrane and wherein the fixed element and the movable element each have two substantially cylindrical wall parts and that the path of the rolling membranes along both elements extends along the respective, substantially cylindrical wall parts.

Such a device is known from US-A-2012/0126540. In this device a complicated circuit is applied in which a turbine is located for converting the energy from the fluid urged from one chamber to a second chamber, of which the volume varies, as caused by the wave motions.

The aim of the invention is to provide such a device having a more simple construction.

Hence the present invention provides a device of the kind referred to above, wherein the chamber is enclosed by the fixed element, the movable element, the first rolling membrane and the second rolling membrane, the movable element takes the form of a hood which is closed on its side remote from a base of the fixed element and which extends round the chamber, the second part of the fixed element comprises an auxiliary chamber placed inside the chamber and that in least one position of the movable element relative to the fixed element, the surface areas transversely of the direction of movement of the hood of the two rolling membranes differ from each other.

Obtained as a result of these measures is a device which has the advantages of rolling membranes and wherein the original functionality is retained.

The invention likewise relates to a method for converting energy from wave motions at sea, wherein a movable element, which together with a fixed element and two rolling membranes encloses a chamber, is subjected to the wave motions, whereby the volume of the chamber varies as a result of the movements of the movable element and the content of the chamber is driven in and out of the chamber as the volume of the chamber changes and generates energy during these movements, wherein the variation of the volume of the chamber is caused by the two rolling membranes having a different volumetric displacement during the movement of the movable element relative to the fixed element.

The word 'cylindrical' is not limited here to a body of circular section, but likewise comprises bodies with a differently shaped section, such as an oval. The term also comprises bodies of polygonal section, although it will be apparent, in view of the use of rolling membranes, that such a shape is not possible in the present application.

The use of rolling membranes makes it attractive to make the device as symmetrical as possible, since the rolling membranes are then loaded symmetrically. This is achieved when the movable element is arranged concentrically relative to the fixed element and extending all around the fixed element, and when the chamber is at least partially annular. It will be apparent that this does not necessarily indicate that the surfaces against which the rolling membranes roll are circular-symmetric, although this is indeed possible and attractive from a structural viewpoint.

The indirectly coupled energy converter is placed between the first and the second part of the fixed element. The fluid can be formed by a gas or by a liquid, although it is likewise possible to make use of a combination. In this latter case it is attractive to have the liquid flow through the energy converter, since the density of a liquid is greater and the energy converter can have smaller dimensioning than when a gas is used.

The use of an indirect coupling between the movable element and the energy converter requires a space for receiving and delivering the fluid passing through the energy converter. A further embodiment provides for this purpose the measure that the movable element takes the form of a hood which is closed on its side remote from the base and which extends round the chamber, that the second part of the fixed element comprises an auxiliary chamber placed inside the chamber and that the chamber and the auxiliary chamber are connected by a turbine.

It will be apparent that means have to be provided for holding the device in place. Use can be made for this purpose of a rigid construction to which the fixed part is connected, although it is also possible to give the device a floating form and anchor it by means of for instance cables. When the device is used in a floating situation it is attractive for a chamber, which is configured to maintain the buoyancy of the device, to be placed in the first part of the fixed element.

In order to enable the movement of the movable element it is attractive for the device to be configured to maintain a vacuum in the space enclosed between the hood, the first element and the rolling membrane on the closed side of the hood. After all, it is not only the volume of the chamber which will change as a result of the rolling membranes during movement of the hood, but also the volume in the space enclosed between the hood, the first element and the rolling membrane on the closed side of the hood.

Application of the device according to the invention requires the movable part of the device being set into resonance so as to enable conversion of as much energy as possible from the wave energy. Resonance requires a tuning of the spring constant of the mass-spring system formed by the movable element and the gas present in the chamber. The volume of the chamber varies linearly with the movement of the movable element. The pressure present in the chamber will hereby vary, since the product of volume and pressure of a gas enclosed in a space is constant as stated in Boyle's law. The spring constant hereby varies in accordance with a hyperbolic function, which is undesirable. In order to obviate this problem a further embodiment proposes that at least one of the substantially cylindrical wall parts has a round or an oval section transversely of the direction of movement with a section varying in the direction of movement. This measure provides the option of giving the volume change a form which is not linear with the movement of the movable element so that the spring constant can be controlled, with the option of compensating the changes in the spring constant as much as possible. The word 'cylindrical' is also used in this context in the sense of a body with a section which is not necessarily a circle.

This embodiment moreover provides a method of the above stated type, wherein the volumetric displacement of at least one of the rolling membranes changes during the movement.

According to a structurally attractive embodiment, the fixed element is provided with at least one wall part with a round or oval section and with respectively a diameter or section varying in the direction of movement. It is after all hereby possible to have a single rolling membrane cause a non-linear volume change.

It is however also possible for both parts of the fixed element to be provided with a wall part with a round or oval section and with respectively a diameter or section varying in the direction of movement. It is then possible to have both rolling membranes cause a non-linear volume change, whereby more freedom of dimensioning is obtained.

The above stated embodiments relate to a deviation from a cylindrical surface of the wall parts on the fixed element. It is likewise possible to arrange such deviations from cylindrical wall parts on the movable element. Another embodiment provides for this purpose the measure that the movable element is provided with at least one wall part with a round or oval section and with respectively a diameter or section varying in the direction of movement. An even greater measure of freedom is hereby obtained.

It is possible to envisage the wall parts of a varying diameter extending over only a small part of the whole length of the wall part, for instance at the end, so as to obtain a slowing effect. The present invention provides the measure however that the wall part with a round or oval section and respectively a diameter or section varying in the direction of movement extends over a substantial part of the length in the direction of movement of the associated element. Not precluded is that this measure is combined with the non-cylindrical portions of wall part extending over only a small part of the length of the wall parts.

It is of course possible for the diameter of the round parts to increase or decrease monotonously in the longitudinal direction, although according to a preferred embodiment the diameter does not vary monotonously in the longitudinal direction, whereby more degrees of freedom are available in the design.

According to a specific embodiment, the diameter is dimensioned in order to maintain spring properties which are as constant as possible over the whole movement length of the movable part.

For the purpose of placing the device in shallow waters it is recommended that the fixed part is connected to the seabed by means of a rigid support construction. For placing in deep seas it is however more attractive for the fixed part to be connected to the seabed by means of flexible anchoring means such as cables.

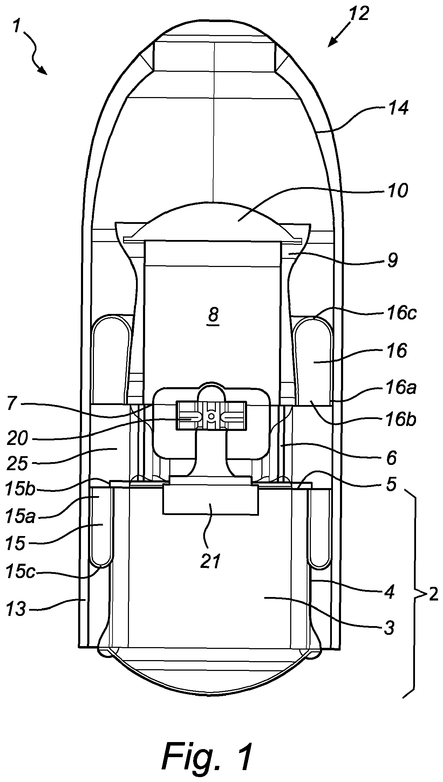

The invention is elucidated hereinbelow with reference to the accompanying figure 1, which shows a vertical section of a device according to the invention.

The device shown in figure 1, which is designated as a whole with 1, is configured to be placed below the water surface, this at a level at which the upper part of the device is exposed to the wave motion of the water surface. Device 1 comprises a base 2 which determines the position of the device, for instance through mounting on a rigid anchoring device not shown in the drawing, such as a structure extending downward from the base and anchored on the seabed. It is however also possible for the base to be anchored to the seabed by means of slack anchoring means such as cables. In this latter case the base will have to be configured to provide buoyancy, for instance by arranging a buoyancy chamber 3.

A cylindrical wall 4 extends on the outer side of buoyancy chamber 3. Buoyancy chamber 3 is further provided with an upper wall 5. Rods 6 extend upward from upper wall 5. These rods 6 support a lower wall 7 of an auxiliary chamber 8 which is provided with a substantially cylindrical outer wall 9. Auxiliary chamber 8 is provided on its upper side with an upper wall 10. Rods 6 thus form a rigid connection between base 2 and auxiliary chamber 8.

A hood 12 extends all around base 2 and auxiliary chamber 8 and concentrically therewith. This hood 12 is torpedo-shaped, with a substantially cylindrical wall 13 and a tapering part 14 on the upper side. Hood 12 is subjected to wave motions.

A first rolling membrane 15 is arranged between cylindrical part 13 of hood 12 and outer wall 4 of buoyancy chamber 3. The two edges 15a, 15b of the first rolling membrane 15 are connected to respectively the cylindrical part 13 of the hood and the outer wall 4 of the buoyancy chamber so that a seal is obtained. The convex side 15c of the first rolling membrane 15 is oriented downward. A second rolling membrane 16 is arranged between cylindrical part 13 of hood 12 and outer wall 9 of auxiliary chamber 8. The two edges 16a, 16b of the second rolling membrane 16 are connected to respectively the cylindrical part 13 of the hood and the outer wall 9 of auxiliary chamber 8 so that a seal is obtained. The convex side 16c of the second rolling membrane 16 is oriented upward. The surface area of the first rolling membrane 15 transversely of the direction of movement of hood 12 is smaller than the surface area of the second rolling membrane 16 transversely of the direction of movement, since the diameter of outer wall 9 of auxiliary chamber 8 is smaller than that of outer wall 4 of buoyancy chamber 3.

It is noted here that the rolling membranes serve not only to seal the space but also to guide the movable part, i.e. the hood, during the movements, so that the necessity for separate guides is hereby obviated. It will be apparent that this guiding function has to be taken into account when dimensioning the rolling membranes.

Placed between upper wall 5 of buoyancy chamber 3 and lower wall 7 of auxiliary chamber 8 is a turbine 20. The shaft of this turbine 20 is co-axial with the axis of device 1. The inlet openings of this turbine 20 lead to the space between upper wall 5 of the buoyancy chamber and lower wall 7 of auxiliary chamber 8, and the outlet openings of turbine 20 lead to the interior of auxiliary chamber 8. It is noted that the turbine can be used in two directions so that the function of the inlet openings and the outlet openings can be reversed. The shaft of turbine 20 is coupled to an electric generator 21 which is placed in buoyancy chamber 3.

The device according to the invention thus provides a space 25 which is enclosed by upper wall 5 and side wall 4 of buoyancy chamber 3, lower wall 7 and side wall 9 of auxiliary chamber 8, both rolling membranes 15, 16 and the substantially cylindrical part 13 of hood 12. When hood 12 moves in the axial direction, as caused by a wave motion of the water surface, the first rolling membrane 15 rolls against side wall 4 of buoyancy chamber 3 and cylindrical wall 13 of hood 12, and the second rolling membrane 16 rolls against side wall 9 of auxiliary chamber 8 and cylindrical wall 13 of hood 12. Side wall 9 of auxiliary chamber 8 is not purely cylindrical; although this wall is round, the diameter varies with the axial distance to the lower wall. The diameter has a certain profile which is chosen so as to avoid linear variation of the volume change caused by the second rolling membrane 16 during movement of hood 12, in order to thereby enable control of the characteristic of the mass-spring system formed by the device according to the invention.

The operation will now be elucidated. As already stated, the device according to the invention functions in a position floating under the water surface. The hood is subjected here to the forces generated by the wave motions, whereby the hood will begin to perform a substantially vertical oscillating movement. In order to achieve optimal generation of energy it is important that the resonance frequency of the device lies as close as possible to the wave frequency, so that resonance occurs. The resonance frequency of the device depends on the spring characteristic and the mass of the hood of the device. The invention provides means for determining the spring characteristic by means of determining the profile of the outer wall of the auxiliary chamber. This profile does after all determine the volume change in the space 25 caused by the first rolling membrane, in which space the air acting as spring is stored. It is otherwise also possible here for the outer wall of the buoyancy chamber to be adapted, this resulting in more freedom in the design. Nor is it precluded that the inner wall parts of the hood are shaped accordingly, although the properties of the rolling membranes have to be taken into account. It is noted that both a liquid and a gas are preferably present in the chamber, and preferably in quantities such that the liquid is guided through the turbine and the gas can function as spring. It is assumed for the time being that the chamber is about half-filled with liquid and half with gas.

The gas enclosed in the space is compressed by the oscillating movement of hood 2, whereby the pressure rises so high that the liquid flows through the turbine into auxiliary chamber 8. When the pressure is reduced the liquid flows back from auxiliary chamber 8 through the turbine to the chamber. During the passage of the liquid, kinetic energy is transmitted to the turbine and transmitted via the shaft to the generator, where the kinetic energy is converted to electrical energy.

Although only a single embodiment is shown, it will be apparent that numerous variants can be applied and that the scope of protection of the patent is defined by the claims.

## Claims

1. Device (1) for converting energy from wave motions at sea to another form of energy, comprising:
- a fixed element (2) and an element (12) movable relative to the fixed element, which elements (2, 12) are configured to perform a relative movement as a result of the wave motions and wherein the elements enclose a chamber (25), the volume of which varies with the relative movements of the elements; and
- an energy converter adapted to convert the mechanical energy from relative movement between the fixed element (2) and the movable element (12) to another form of energy,
- wherein the fixed element (2) and the movable element (12) are each connected to a first rolling membrane (15) and to a second rolling membrane (16),
- wherein the fixed element (2) and the movable element (12) each have two substantially cylindrical wall parts and that the path of the rolling membranes (15, 16) along both elements (2, 12) extends along the respective, substantially cylindrical wall parts,
**characterized in that**
- the chamber is enclosed by the fixed element (2), the movable element (12), the first rolling membrane (15) and the second rolling membrane (16);
- the movable element takes the form of a hood (12) which is closed on its side remote from a base of the fixed element (2) and which extends round the chamber (25),
- the second part of the fixed element (2) comprises an auxiliary chamber (8) placed inside the chamber; and
- in at least one position of the movable element (12) relative to the fixed element (2) the surface areas transversely of the direction of movement of the hood (12) of the two rolling membranes (15, 16) differ from each other.

2. Device (1) as claimed in claim 1, **characterized in that** the movable element (12) is arranged concentrically relative to the fixed element (2) and extending all around the fixed element, and that the chamber (25) is at least partially annular.

3. Device (1) as claimed in claim 2, **characterized in that** the fixed element (2) comprises a first part and a second part placed at a distance from the base of the fixed element (2), that each part is provided with a substantially cylindrical wall part and that the chamber (25) likewise extends between the first and the second part of the fixed element (2).

4. Device (1) as claimed in any of the preceding claims, **characterized in that** a chamber (3) configured to maintain the buoyancy of the device is placed in the first part of the fixed element (2).

5. Device (1) as claimed in any of the preceding claims, **characterized in that** the device is configured to maintain a vacuum in the space enclosed between the hood, the first part of the fixed element (2) and the rolling membrane on the closed side of the hood (12).

6. Device (1) as claimed in any of the foregoing claims, **characterized in that** at least one of the substantially cylindrical wall parts has a round or oval section transversely of the direction of movement with a section varying in the direction of movement.

7. Device (1) as claimed in claim 6, **characterized in that** the fixed element (2) is provided with at least one wall part with a round or oval section and with a section varying in the direction of movement.

8. Device (1) as claimed in claim 6 or 7, **characterized in that** the movable element (12) is provided with at least one wall part with a round or oval section and with a section varying in the direction of movement.

9. Device (1) as claimed in claim 6, 7 or 8, **characterized in that** the wall part with a round or oval section and a section varying in the direction of movement extends over a substantial part of the length in the direction of movement of the associated element.

10. Device (1) as claimed in claim 9, **characterized in that** the section is dimensioned in order to maintain spring properties which are as constant as possible over the whole movement length of the movable part.

11. Device (1) as claimed in any of the foregoing claims, **characterized in that** the fixed part (2) is connected to the seabed by means of a rigid support construction or by means of flexible anchoring means.

12. Method for converting energy from wave motions at sea, wherein a movable element (12), which together with a fixed element (2) and a first rolling membrane (15) and a second rolling membrane (16) encloses a chamber (25), is subjected to the wave motions, whereby the volume of the chamber varies as a result of the movements of the movable element (12) and the content of the chamber (25) is driven in and out of the chamber during volume changes of the chamber and generates energy during these movements, wherein the variation of the volume of the chamber is caused by the two rolling membranes (15, 16) having a different volumetric displacement during the movement of the movable element (12) relative to the fixed element (2) and converting the mechanical energy from relative movement between the fixed element (2) and the movable element (12) to another form of energy, wherein the volumetric displacement of at least one of the rolling membranes changes during the movement.

## Patentansprüche

1. Vorrichtung (1) zum Umwandeln von Energie aus Wellenbewegungen auf See in eine andere Energieform, die Folgendes enthält:
- ein festes Element (2) und ein Element (12), das relativ zu dem festen Element bewegbar ist; wobei die Elemente (2, 12) dazu ausgelegt sind, als ein Ergebnis der Wellenbewegungen eine relative Bewegung auszuführen, und wobei die Elemente eine Kammer (25) einschließen, deren Volumen mit den relativen Bewegungen der Elemente variiert; und
- einen Energiewandler, der dazu eingerichtet ist, die mechanische Energie von relativer Bewegung zwischen dem festen Element (2) und dem bewegbaren Element (12) in eine andere Form von Energie umzuwandeln,
- wobei das feste Element (2) und das bewegbare Element (12) jeweils mit einer ersten rollenden Membran (15) und mit einer zweiten rollenden Membran (16) verbunden sind,
- wobei das feste Element (2) und das bewegbare Element (12) jeweils zwei im Wesentlichen zylindrische Wandteile aufweisen und dass sich der Pfad der rollenden Membrane (15, 16) entlang beider Elemente (2, 12) entlang den entsprechenden im Wesentlichen zylindrischen Wandteilen erstreckt,
**dadurch gekennzeichnet, dass**
- die Kammer von dem festen Element (2), dem bewegbaren Element (12), der ersten rollenden Membran (15) und der zweiten rollenden Membran (16) eingeschlossen wird;
- das bewegbare Element die Form einer Haube (12) annimmt, die auf ihrer Seite entfernt von einer Basis des festen Elements (2) geschlossen ist und sich rings um die Kammer (25) erstreckt,
- das zweite Teil des festen Elements (2) eine zusätzliche Kammer (8) enthält, die in der Kammer platziert ist; und
- sich in mindestens einer Position des bewegbaren Elements (12) relativ zu dem festen Element (2) die Oberflächenbereiche quer zu der Richtung der Bewegung der Haube (12) der zwei rollenden Membrane (15, 16) voneinander unterscheiden.

2. Vorrichtung (1) nach Anspruch 1, **dadurch gekennzeichnet, dass** das bewegbare Element (12) relativ zu dem festen Element (2) konzentrisch angeordnet ist und sich vollständig rings um das feste Element erstreckt, und dass die Kammer (25) mindestens teilweise ringförmig ist.

3. Vorrichtung (1) nach Anspruch 2, **dadurch gekennzeichnet, dass** das feste Element (2) ein erstes Teil und ein zweites Teil enthält, die in einem Abstand von der Basis des festen Elements (2) platziert sind, dass jedes Teil mit einem im Wesentlichen zylindrischen Wandteil versehen ist und dass sich die Kammer (25) gleichermaßen zwischen dem ersten und dem zweiten Teil des festen Elements (2) erstreckt.

4. Vorrichtung (1) nach einem der vorangehenden Ansprüche, **dadurch gekennzeichnet, dass** eine Kammer (3), die dazu ausgelegt ist, den Auftrieb der Vorrichtung aufrechtzuerhalten, in dem ersten Teil des festen Elements (2) platziert ist.

5. Vorrichtung (1) nach einem der vorangehenden Ansprüche, **dadurch gekennzeichnet, dass** die Vorrichtung dazu ausgelegt ist, ein Vakuum in dem zwischen der Haube, dem ersten Teil des festen Elements (2) und der rollenden Membran auf der geschlossenen Seite der Haube (12) eingeschlossenen Bereich aufrechtzuerhalten.

6. Vorrichtung (1) nach einem der vorangehenden Ansprüche, **dadurch gekennzeichnet, dass** mindestens eines der im Wesentlichen zylindrischen Wandteile einen runden oder ovalen Abschnitt quer zu der Richtung der Bewegung aufweist, wobei ein Abschnitt in der Richtung der Bewegung variiert.

7. Vorrichtung (1) nach Anspruch 6, **dadurch gekennzeichnet, dass** das feste Element (2) mit mindestens einem Wandteil mit einem runden oder ovalen Abschnitt und mit einem Abschnitt, der in der Richtung der Bewegung variiert, versehen ist.

8. Vorrichtung (1) nach Anspruch 6 oder 7, **dadurch gekennzeichnet, dass** das bewegliche Element (12) mit mindestens einem Wandteil mit einem runden oder ovalen Abschnitt und mit einem Abschnitt, der in der Richtung der Bewegung variiert, versehen ist.

9. Vorrichtung (1) nach Anspruch 6, 7 oder 8, **dadurch gekennzeichnet, dass** sich das Wandteil mit einem runden oder ovalen Abschnitt und mit einem Abschnitt, der in der Richtung der Bewegung variiert, über einen wesentlichen Teil der Länge in der Richtung der Bewegung des zugeordneten Elements erstreckt.

10. Vorrichtung (1) nach Anspruch 9, **dadurch gekennzeichnet, dass** der Abschnitt dimensioniert ist, um Federeigenschaften aufrechtzuerhalten, die über die gesamte Bewegungslänge des bewegbaren Teils so konstant wie möglich sind.

11. Vorrichtung (1) nach einem der vorangehenden Ansprüche, **dadurch gekennzeichnet, dass** das feste Teil (2) mit dem Meeresboden mittels einer starren Stützkonstruktion oder mittels eines flexiblen Verankerung verbunden ist.

12. Verfahren zum Umwandeln von Energie aus Wellenbewegungen auf See, wobei ein bewegbares Element (12), das zusammen mit einem festen Element (2) und einer ersten rollenden Membran (15) und einer zweiten rollenden Membran (16) eine Kammer (25) einschließt, den Wellenbewegungen ausgesetzt ist, wobei das Volumen der Kammer als ein Ergebnis der Bewegungen des bewegbaren Elements (12) variiert und der Inhalt der Kammer (25) während Volumenänderungen der Kammer in die Kammer und aus der Kammer getrieben wird und während dieser Bewegungen Energie erzeugt, wobei die Veränderung des Volumens der Kammer durch die zwei rollenden Membrane (15, 16) mit einer unterschiedlichen volumetrischen Verdrängung während der Bewegung des bewegbaren Elements (12) relativ zu dem festen Element (2) verursacht wird, und Umwandeln der mechanischen Energie von relativer Bewegung zwischen dem festen Element (2) und dem bewegbaren Element (12) in eine andere Form von Energie, wobei sich die volumetrische Verdrängung von mindestens einer der rollenden Membrane während der Bewegung verändert.

## Revendications

1. Dispositif (1) pour convertir l'énergie du mouvement des vagues dans la mer en une autre forme d'énergie, comprenant :
- un élément fixe (2) et un élément (12) mobile par rapport à l'élément fixe, lesquels éléments (2, 12) sont configurés pour effectuer un mouvement relatif résultant du mouvement des vagues et les éléments renfermant une chambre (25), dont le volume varie avec les mouvements relatifs des éléments ; et
- un convertisseur d'énergie prévu pour convertir l'énergie mécanique du mouvement relatif entre l'élément fixe (2) et l'élément mobile (12) en une autre forme d'énergie,
- l'élément fixe (2) et l'élément mobile (12) étant chacun connectés à une première membrane roulante (15) et à une deuxième membrane roulante (16),
- l'élément fixe (2) et l'élément mobile (12) ayant chacun deux parties de paroi sensiblement cylindriques et que la trajectoire des membranes roulantes (15, 16) le long des deux éléments (2, 12) s'étend le long des parties de paroi sensiblement cylindriques respectives,
**caractérisé en ce que**
- la chambre est renfermée par l'élément fixe (2), l'élément mobile (12), la première membrane roulante (15) et la deuxième membrane roulante (16) ;
- l'élément mobile prend la forme d'un capot (12) qui est fermé sur son côté éloigné d'une base de l'élément fixe (2) et qui s'étend autour de la chambre (25),
- la deuxième partie de l'élément fixe (2) comprend une chambre auxiliaire (8) placée à l'intérieur de la chambre; et
- dans au moins une position de l'élément mobile (12) par rapport à l'élément fixe (2), les superficies transversalement à la direction de déplacement du capot (12) des deux membranes roulantes (15, 16) sont différentes l'une de l'autre.

2. Dispositif (1) selon la revendication 1, **caractérisé en ce que** l'élément mobile (12) est disposé concentriquement par rapport à l'élément fixe (2) et s'étendant tout autour de l'élément fixe, et **en ce que** la chambre (25) est au moins en partie annulaire.

3. Dispositif (1) selon la revendication 2, **caractérisé en ce que** l'élément fixe (2) comprend une première partie et une deuxième partie placée à distance de la base de l'élément fixe (2), **en ce que** chaque partie est pourvue d'une partie de paroi sensiblement cylindrique et **en ce que** la chambre (25) s'étend également entre la première et la deuxième partie de l'élément fixe (2).

4. Dispositif (1) selon l'une quelconque des revendications précédentes, **caractérisé en ce qu'**une chambre (3) configurée pour maintenir la flottabilité du dispositif est placée dans la première partie de l'élément fixe (2).

5. Dispositif (1) selon l'une quelconque des revendications précédentes, **caractérisé en ce que** le dispositif est configuré pour maintenir un vide dans l'espace renfermé entre le capot, la première partie de l'élément fixe (2) et la membrane roulante sur le côté fermé du capot (12).

6. Dispositif (1) selon l'une quelconque des revendications précédentes, **caractérisé en ce qu'**au moins l'une des parties de paroi sensiblement cylindriques présente une section ronde ou ovale transversalement à la direction du mouvement, avec une section variant dans la direction du mouvement.

7. Dispositif (1) selon la revendication 6, **caractérisé en ce que** l'élément fixe (2) est pourvu d'au moins une partie de paroi avec une section ronde ou ovale et avec une section variant dans la direction du mouvement.

8. Dispositif (1) selon la revendication 6 ou 7, **caractérisé en ce que** l'élément mobile (12) est pourvu d'au moins une partie de paroi avec une section ronde ou ovale et avec une section variant dans la direction du mouvement.

9. Dispositif (1) selon la revendication 6, 7 ou 8, **caractérisé en ce que** la partie de paroi avec une section ronde ou ovale et une section variant dans la direction du mouvement s'étend sur une partie substantielle de la longueur dans la direction du mouvement de l'élément associé.

10. Dispositif (1) selon la revendication 9, **caractérisé en ce que** la section est dimensionnée afin de maintenir des propriétés de ressort qui sont aussi constantes que possible sur toute la longueur du mouvement de la partie mobile.

11. Dispositif (1) selon l'une quelconque des revendications précédentes, **caractérisé en ce que** la partie fixe (2) est connectée au fond marin au moyen d'une construction de support rigide ou au moyen d'un moyen d'ancrage flexible.

12. Procédé pour convertir l'énergie du mouvement des vagues en mer, un élément mobile (12) qui, conjointement avec un élément fixe (2) et une première membrane roulante (15) et une deuxième membrane roulante (16), renferme une chambre (25), étant soumis au mouvement des vagues, le volume de la chambre variant du fait des mouvements de l'élément mobile (12) et le contenu de la chambre (25) étant entraîné dans et hors de la chambre au cours de changements de volume de la chambre et générant de l'énergie au cours de ces mouvements, la variation du volume de la chambre étant causée par les deux membranes roulantes (15, 16) ayant un déplacement volumétrique différent au cours du mouvement de l'élément mobile (12) par rapport à l'élément fixe (2) et convertissant l'énergie mécanique du mouvement relatif entre l'élément fixe (2) et l'élément mobile (12) en une autre forme d'énergie, le déplacement volumétrique d'au moins l'une des membranes roulantes variant au cours du mouvement.
